# EUROPEAN PATENT APPLICATION

(11) **EP 4 037 148 A1**
(43) Date of publication of application: **03.08.2022**
(21) Application number: 21154017.4
(22) Date of filing: 28.01.2021
(51) Int. Cl.: H02K 1/17, H02K 1/27

(54) **PERMANENT MAGNET MODULE FOR A PERMANENT MAGNET MACHINE**

(71) Applicant: Siemens Gamesa Renewable Energy A/S, 7330 Brande (DK)
(72) Inventor: Becs, Balazs Janos, 24943 Flensburg (DE); Choudhary, Vikas, Bangalore (IN); Demissie, Edom, Sheffield, S3 7XB (GB); Groendahl, Erik, 8653 Them (DK); Jacobsen, Bo Nedergaard, 8300 Odder (DK); Urda, Adriana Cristina, 2300 Copenhagen (DK); Azar, Ziad, Sheffield, South Yorkshire S10 4ED (GB)
(74) Representative: Aspacher, Karl-Georg

(57) **Abstract**

A permanent magnet module (101) extends along a longitudinal axis (Y1) and comprises:
- at least a permanent magnet (200) including a lower base (205), an opposite upper base (202) and two lateral sides (203, 204) extending between the lower base (205) and the upper base (202),
- a support (301) for attaching the permanent magnet module (101) to the stator (11) or rotor (12), the support (301) including a support base (311) for supporting the permanent magnet (200) at the lower base (205) and at least two lateral covers (313, 314) for covering at least a portion of the two lateral sides (203, 204) of the permanent magnet (200). The support (301) includes a plurality of lamination sheets (201) stacked along the longitudinal axis (Y1).

## Description

### Field of invention

The present invention relates to the field of permanent magnet machines including permanent magnet modules.

### Art Background

A permanent-magnet electric machine, such as an electric generator installed in a wind turbine, typically comprises a rotor which rotates about a stator around a central rotational axis. Stator and rotor are separated from each other by an airgap, circumferentially extended around the rotational axis.

In a permanent magnet electric machine, the rotor comprises a plurality of permanent magnets modules, each module including a support, for example in the form of a baseplate, and one or more permanent magnets attached to the support. The support is attached to the rotor body, so that, the support is interposed between the respective magnet and the rotor body.

In the above described direct drive generators it may happen that certain operating conditions cause the permanent magnet modules to move relatively to the rotor body. This phenomenon is also knowns as "magnet rattling". The rattling of the permanent magnet modules in the tangential and/or the radial directions may be avoided by fixing means, for example by means of gluing or bolting to the rotor body. This would however add costs and complexity to the electric machine. Furthermore, permanent magnet electric machines may exhibit high rotor losses and hence reduced performance, due to hot magnets.

It is therefore desirable to provide efficient and cost-effective constructional features of a permanent magnet machine for effectively fixing the permanent magnet modules to the rotor body and avoiding the oscillations and rattling of the permanent magnet modules with respect to the rotor body. At the same time, it is further desirable to provide permanent magnet modules that allow reducing eddy current losses.

### Summary of the Invention

This objective may be solved by the permanent electrical machine according to the independent claims. Advantageous embodiments of the present invention are described by the dependent claims.

According to a first aspect of the present invention, a permanent magnet module is provided for a stator or rotor of a permanent magnet electrical machine. The permanent magnet module extends along a longitudinal axis and comprises:
- at least a permanent magnet including a lower base, an opposite upper base and two lateral sides extending between the lower base and the upper base,
- a support for attaching the permanent magnet module to the stator or rotor, the support including a support base for supporting the permanent magnet at the lower base and at least two lateral covers for covering at least a portion of the two lateral sides of the permanent magnet. The support includes a plurality of lamination sheets stacked along the longitudinal axis.

According to a second aspect of the present invention a method of manufacturing is provided for manufacturing a permanent magnet module for a stator or rotor of a permanent magnet electrical machine. The permanent magnet module extends along a longitudinal axis. The method comprises the steps of:
- manufacturing a permanent magnet including a lower base, an opposite upper base and two lateral sides extending between the lower base and the upper base,
- manufacturing a plurality of lamination sheets, each lamination sheet having a lamination base and at least two lateral wings protruding from the lamination base,
- stacking the plurality of lamination sheets along the longitudinal axis for forming a support including a support base and at least two lateral covers, the stacked lamination bases forming the support base and the stacked lateral wings forming the two lateral covers,
- attaching the permanent magnet to the support, so that the permanent magnet is supported at the lower base and at least a portion of the two lateral sides are covered by the two lateral covers.

A plurality of the above described permanent magnet modules may be conveniently applied to the stator or rotor of an electric generator installed in a wind turbine

The laminations structure of the permanent magnet module according to present inventions allows reducing eddy current losses in a permanent magnet electrical machine. Manufacturing and stacking of a plurality of laminating sheets provides a cheap manufacturing process for permanent magnet modules. The desired shape of the supports for the magnets is achieved by manufacturing, for example by punching, a plurality of stacked identical lamination sheets, each having the desired shape. Covers may be directly integrated in the support for covering at least a portion of the free surfaces of the magnet, thus avoiding the subsequent application of further cover elements, for example by gluing or welding.

According to possible embodiments of the invention, the support includes an inner hollow cavity extending along the longitudinal axis between two longitudinal openings of the hollow cavity, wherein the hollow cavity is delimited by the support base, by the two lateral covers and by an upper cover for covering the upper base of the permanent magnet. In such embodiment, the hollow cavity provides a secure encapsulation for the magnet. If magnets are subject to a force towards the air gap of the permanent magnet electrical machine, the side walls of the encapsulation can conveniently transfer such force to the structure to which the permanent magnet modules are fixed.

According to other possible embodiments of the invention, the support includes at least one axial cover for closing at least one of the longitudinal openings of said hollow cavity. This permits to provide an encapsulation also along the longitudinal axis.

According to further embodiments of the invention, the support base includes at least a protrusion on an external surface for coupling the permanent magnet module with said stator or rotor. Each protrusion may be shaped as a dovetail. Such embodiment provides a cheap solution for a dovetail manufacturing by stacking a plurality of lamination sheets each including a dovetail, which may be created by punching. This avoids any step of machining the final support for creating the dovetail.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a schematic section of a wind turbine including embodiments of the present invention.
- Fig. 2: shows a cross-sectional view of a permanent magnet machine including a rotor according to the present invention.
- Fig. 3: shows an axonometric view of a permanent magnet module of the rotor of the permanent magnet machine of fig. 2.
- Fig. 4: shows a cross section of the permanent magnet module of fig. 3.
- Fig. 5: shows a top view of a first embodiment of a lamination sheet for forming a magnet support for the permanent magnet module of fig. 3.
- Fig. 6: shows a top view of a second embodiment of a lamination sheet for forming a magnet support according to the present invention.
- Fig. 7: shows a top view of a third embodiment of a lamination sheet for forming a magnet support according to the present invention.

### Detailed Description

The illustrations in the drawings are schematically. It is noted that in different figures, similar or identical elements are provided with the same reference signs.

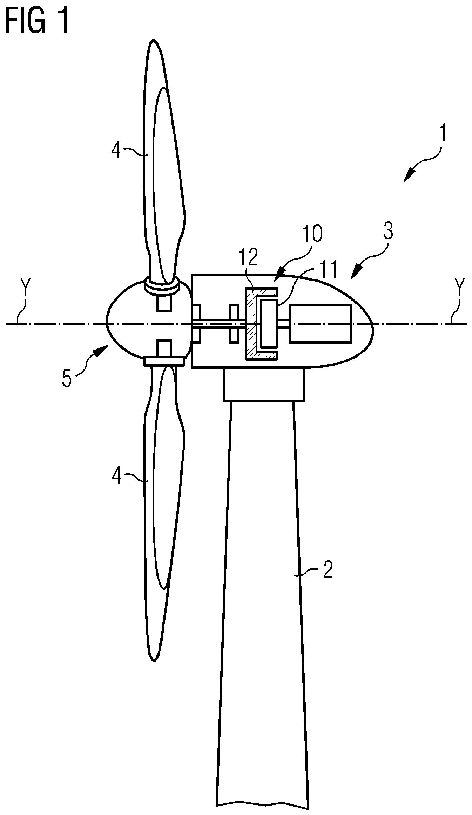

**Figure 1** shows a partial cross-sectional view of a wind turbine 1 including a permanent magnet machine 10, i.e. an electrical generator, which includes a permanent magnet module according to the invention. The wind turbine 1 comprises a tower 2, which is mounted on a non-depicted foundation. A nacelle 3 is arranged on top of the tower 2. The wind turbine 1 further comprises at least a wind rotor 5 having a hub and at least one blade 4 (in the embodiment of Figure 1, the wind rotor comprises three blades 4, of which only two blades 4 are visible). The wind rotor 5 is rotatable around a rotational axis Y. The terms axial, radial and circumferential in the following are to be intended with reference to the longitudinal axis Y of rotation of the permanent magnet machine 10. The blades 4 extend substantially radially with respect to the rotational axis Y. The permanent magnet machine 10 includes a stator 11 and a rotor 12. The rotor 12 is rotatable with respect to the stator 11 about the rotational axis Y. In the embodiment of Figure 1, the rotor 12 is radially external with respect the stator 11 and rotatable about the longitudinal axis Y. A circumferential air gap is provided between the stator 11 and the rotor 12. According to other possible embodiments of the present invention (not represented in the attached figures), the rotor 12 is radially internal with respect the stator 11 and rotatable about the rotational axis Y.

According to other possible embodiments of the present invention (not represented in the attached figures), the present invention may be applied to any type of permanent magnet electric machines, e.g. radial, axial, etc.

A plurality of permanent magnets modules (not visible in Figure 1) is attached to the rotor 12 by means of respective supports, as detailed in the following. According to other possible embodiments of the present invention (not represented in the attached figures), a plurality of permanent magnets modules may be attached to the stator of a permanent magnet machine.

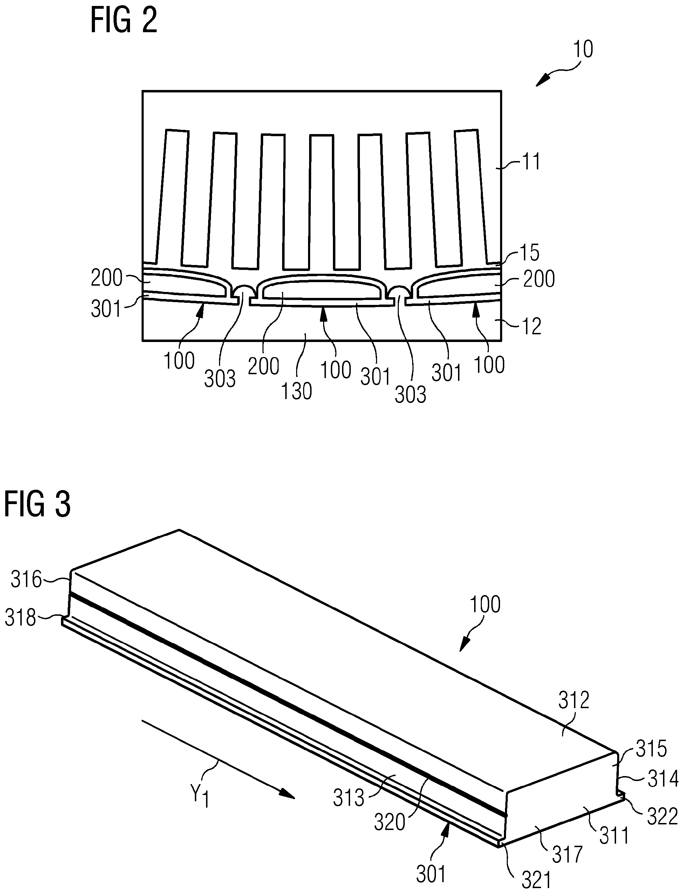

**Figure 2** shows a partial cross-sectional view of the permanent magnet machine 10 including a plurality of permanent magnet modules 100 attached to the rotor 12. The permanent magnet modules 100 are attached to the rotor 12 so that the permanent magnet modules 100 radially face the stator 11 at an air gap 15. Each permanent magnet module 100 comprises a permanent magnet 200 and a support 301 for housing the permanent magnet 200. According to other embodiment of the present invention (not shown), each permanent magnet module 100 may comprise more than one permanent magnet 200. Each of the permanent magnets 200 is attached to a rotor body 130 of the rotor 12 by means of the respective support 301. Each support 301 may be permanently attached or removably attachable to the rotor body 130. The permanent magnet modules 100 are distributed about the longitudinal axis Y in such a way that a plurality of tangential gaps is provided between the permanent magnet modules 100. Each tangential gap is tangentially provided between two tangentially adjacent permanent magnet modules 100. At each tangential gap a radial protrusion 303 is provided, which radially protrudes from an inner surface of the rotor body 130 towards the longitudinal axis Y. The radial protrusion 303 is T-shaped. Each radial protrusion 303 radially interferes with two respective adjacent supports 301 for radially holding two respective permanent magnet modules 100 in contact with the rotor body 130. Each permanent magnet module 100 may be further radially maintained in contact with the rotor body 130 by means of the radial magnetic force establishing between the respective permanent magnet 200 and the rotor body 130. The T-shaped protrusion 303 may have a flat or cylindrical surface. According to other possible embodiments of the present invention (not shown in figure 2), each support 301 comprises at least one radial protrusion on the surface radially opposite to the air gap 15, to be coupled to a respective seat provided in the rotor body 130. The protrusion on the support 301 and the respective seat in the rotor body 130 may be dovetail shaped. According to other possible embodiments of the present invention (not shown) each support 301 may be permanently attached or removably attachable to the rotor body 130 by means of attaching means of another type, different from the above-described ones.

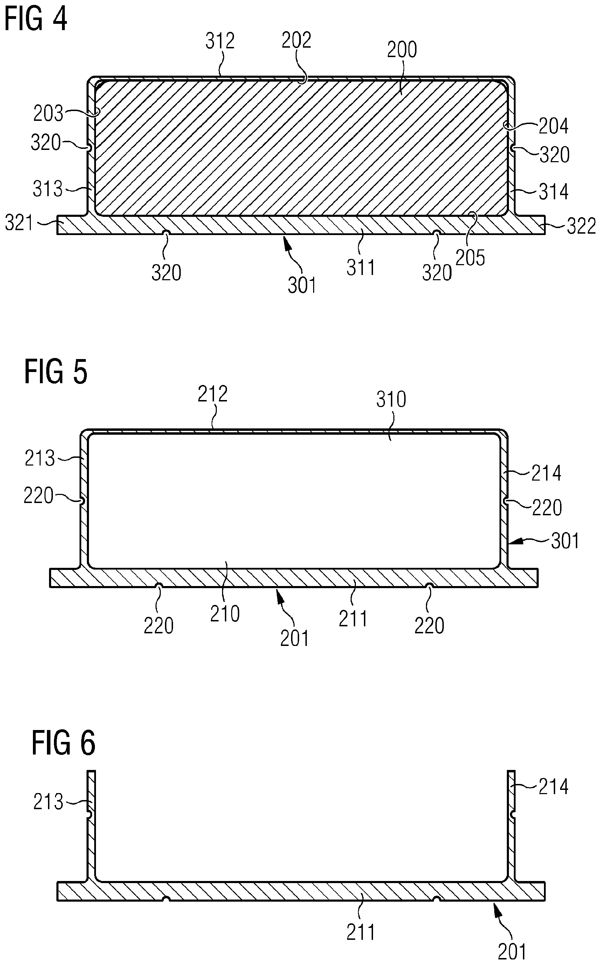

**Figures 3** and **4** respectively show an axonometric view and a cross sectional of a permanent magnet module 100, which may be used in the permanent magnet machine 10 of figure 2. The permanent magnet module 100 extending along a longitudinal axis Y1. The longitudinal axis Y1 may be disposed parallel to the rotational axis Y of the permanent magnet module 100. The permanent magnet module 100 include one or more permanent magnet 200 extending along the longitudinal axis Y1. The permanent magnet 200 includes a lower base 205, an opposite upper base 202 and two lateral sides 203, 204 extending between the lower base 205 and the upper base 202. The permanent magnet 200 may have a rectangular section (as shown in figure 4) or another type of section, for example trapezoidal or dome shaped. The support 301 including a support base 311 for supporting the permanent magnet 200 at the lower base 205, two lateral covers 313, 314 for covering the two lateral sides 203, 204 and an upper cover 312 for covering the upper base 202. The support base 311 comprises two base wings 321, 322, which respectively extend beyond the two lateral covers 313, 314 in a direction orthogonal to the longitudinal axis Y1. The two base wings 321 permits the coupling with the T-shaped protrusions 303. As it can be seen in the cross-sectional view of figure 4, the support base 311, the two lateral covers 313, 314 and the upper cover 312 delimits a hollow cavity 310 for housing the permanent magnet 200. The hollow cavity 310 extends along the longitudinal axis Y1 between two longitudinal openings 315, 316. The support 301 includes a plurality of lamination sheets 201 stacked along the longitudinal axis Y1.

**Figure 5** show one lamination sheet 201 for the embodiment of the support 301 of figure 2 and 4. The lamination sheet 201 has a shape corresponding to the shape of the corresponding support 301 (as for example shown in the cross-sectional view of fig. 4). The lamination sheet 201 comprises a lamination base 211, two lateral wings 213, 214 protruding from the lamination base 211 and a lamination cover 212 opposite to the lamination base 211. The lateral wings 213, 214 protrudes from the lamination base 211 transversally, for example orthogonally, thereto. The lamination base 211 and the lamination cover 212 are connected by the two lateral wings 213, 214, so that a lamination hole 210 is formed in the lamination sheet 201. The lamination hole 210 is delimited by lamination base 211, the lamination cover 212 and the two lateral wings 213, 214.

A method for manufacturing the permanent magnet module 100 comprises the steps of:
- manufacturing the permanent magnet 200,
- manufacturing a plurality of the lamination sheets 201,
- stacking the plurality of lamination sheets 201 along the longitudinal axis Y1 for forming the support 301.

The stacking is made in such a way that the stacked lamination bases 211 form the support base 311, the stacked lateral wings 213, 214 form the two lateral covers 313, 314 and the stacked lamination covers 212 form the upper cover 312. The stacked lamination holes 210 form the hollow cavity 310. Each of the lamination sheets 201 may be punched before the stacking. A plurality of welding lines 320 parallel to the longitudinal axis Y1 may be provided on the external surfaces of the support 301 for keeping together the laminations sheets. In the embodiment of the figure 3 and 4 two welding lines 320 are provided along an external surface of the support base 311 and one welding line 320 is provided along an external surface of each of the lateral covers 313, 314. The welding lines 320 are performed in respective indentation 220 provided in corresponding positions on each of the lamination sheets. In other embodiments (not shown) a different number and positioning of the welding lines 320 and the indentations 220 may be implemented. According to another method of manufacturing ("bonded process"), the lamination sheets 201 do not require welding, as they are bonded to each other as they are stacked.

After the support 301 is formed, the permanent magnet 200 is attached to the support 301, so that the permanent magnet 200 is supported at the lower base 205, the two lateral sides 203, 204 are covered by the two lateral covers 313, 314 and the upper base 202 is covered by the upper cover 312 for covering of the permanent magnet 200. In such step of the permanent magnet 200 may be fixed by gluing or other fixing means, for example welding, to the support base 311. One or two axial covers 317,318 may be provided for closing respectively one or both of the two longitudinal openings 315, 316 of the hollow cavity 310.

Attaching the permanent magnet 200 to the support 301 may be performed by first closing a first longitudinal opening 315 of the hollow cavity 310 with a first axial cover 317. The axial cover 317 may be formed during the bonded process or welded along with the lamination sheets 201 of the lamination stack. After that, glue may be placed in the hollow cavity 310 on support base 311 and permanent magnet 200 is slid along the longitudinal axis Y1 from the second longitudinal opening 316, which is not covered, to the first longitudinal opening 315 with the first axial cover 317. The permanent magnet 200 may be pushed towards the glue and the support base 311 by applying a normal force on the upper cover 312 to make sure that the glue has enough pressure for the curing process. After that a second axial cover 318 is applied on the second longitudinal opening 316 by means of gluing or welding.

**Figure 6** shows a second embodiment of the lamination sheet 201. This second embodiment differentiate itself from the first embodiment in that the lamination sheet 201 of the third embodiment includes the lamination base 211 and the two lateral wings 213, 214 but it does not include the lamination cover 212. Therefore, after the stacking of a plurality of such lamination sheets 201 is performed, a support 301 is obtained, which does not include the upper cover 312. Such an embodiment may simplify the punching process of the lamination sheets 201 and the coupling between the support 301 and the permanent magnet 200. A cover may be subsequently applied over the upper base 202 the permanent magnet 200. Such additional cover (not shown in the figures) ay be secured to the two lateral covers 313, 314, for welded to the two lateral covers 313, 314.

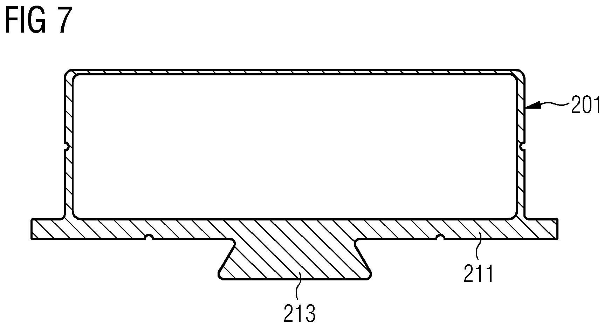

**Figure 7** shows a third embodiment of the lamination sheet 201. This third embodiment differentiate itself from the first embodiment in that the lamination sheet 201 includes one or more protrusions 219 (one dovetail shaped protrusion 219 is shown in figure 7) on an external surface of the lamination base 211. After the stacking of a plurality of such lamination sheets 201 is performed, a support 301 is obtained, which includes one or more respective protrusions on an external surface of the support base 311, for coupling the permanent magnet module 100 with respective seats (for example respective dovetail shaped cavities) provided on the rotor body 130. Performing classical and expensive machining operations are therefore avoided by the manufacturing of a support 301 having a dovetail protrusion obtained through the stacking of lamination sheets 201, each having a correspondent dovetail shaped protrusion 219, which is created during the punching process.

## Claims

1. A permanent magnet module (100) for a stator (11) or rotor (12) of a permanent magnet electrical machine (10), the permanent magnet module (100) extending along a longitudinal axis (Y1) and comprising:
- at least a permanent magnet (200) including a lower base (205), an opposite upper base (202) and two lateral sides (203, 204) extending between the lower base (205) and the upper base (202),
- a support (301) for attaching the permanent magnet module (101) to the stator (11) or rotor (12), the support (301) including a support base (311) for supporting the permanent magnet (200) at the lower base (205) and at least two lateral covers (313, 314) for covering at least a portion of the two lateral sides (203, 204) of the permanent magnet (200), wherein the support (301) includes a plurality of lamination sheets (201) stacked along the longitudinal axis (Y1).

2. The permanent magnet module (100) according to claim 1, wherein the support (301) includes an inner hollow cavity (310) extending along the longitudinal axis (Y1) between two longitudinal openings (315, 316) of the hollow cavity (310), wherein the hollow cavity (310) is delimited by the support base (311), by the two lateral covers (313, 314) and by an upper cover (312) for covering the upper base (202) of the permanent magnet (200).

3. The permanent magnet module (100) according to claim 2, wherein the support (301) includes at least one axial cover (317,318) for closing at least one of longitudinal openings (315, 316) of said hollow cavity (310).

4. The permanent magnet module (100) according to any of the previous claims, wherein the support base (311) includes at least a protrusion on an external surface for coupling the permanent magnet module (100) with said stator (11) or rotor (12) .

5. A stator (11) or rotor (12) for a permanent magnet electrical machine (10) including a plurality of permanent magnet modules (100) according to any of the previous claims.

6. A permanent magnet electrical machine (10) including the stator (11) or rotor (12) according to the previous claim.

7. A wind turbine (1) including permanent magnet electrical machine (10) according to the previous claim, the permanent magnet electrical machine (10) being an electrical generator.

8. A method of manufacturing a permanent magnet module (100) for a stator (11) or rotor (12) of a permanent magnet electrical machine (10), the permanent magnet module (101) extending along a longitudinal axis (Y1), the method comprising the steps of:
- manufacturing a permanent magnet (200) including a lower base (205), an opposite upper base (202) and two lateral sides (203, 204) extending between the lower base (205) and the upper base (202),
- manufacturing a plurality of lamination sheets (201), each lamination sheet (201) having a lamination base (211) and at least two lateral wings (213, 214) protruding from the lamination base (211),
- stacking the plurality of lamination sheets (201) along the longitudinal axis (Y1) for forming a support (301) including a support base (311) and at least two lateral covers (313, 314), the stacked lamination bases (211) forming the support base (311) and the stacked lateral wings (213, 214) forming the two lateral covers (313, 314),
- attaching the permanent magnet (200) to the support (301), so that the permanent magnet (200) is supported at the lower base (205) and at least a portion of the two lateral sides (203, 204) are covered by the two lateral covers (313, 314).

9. The method according to claim 8, wherein each lamination sheet (201) further includes a lamination cover (212) opposite to the lamination base (211), the lamination base (211) and the lamination cover (212) being connected by the two lateral wings (213, 214) so that a lamination hole (210) is formed in the lamination sheet (201) delimited by lamination base (211), the lamination cover (212) and the two lateral wings (213, 214), so that the stacked lamination holes (210) form a hollow cavity (310) extending along the longitudinal axis (Y1) between two longitudinal openings (315, 316).

10. The method according to claim 9, wherein at least one axial cover (317,318) is applied to the permanent magnet module (100) for closing at least one of longitudinal openings (315, 316) of said hollow cavity (310).

11. The method according to any of the claims 8 to 10, wherein the method includes the step of gluing the permanent magnet (200) to the support base (311).
